(19) Europäisches Patentamt
European Patent Office
Office européen des brevets

(11) **EP 2 789 662 B1**

(12) **EUROPEAN PATENT SPECIFICATION**

(45) Date of publication and mention
of the grant of the patent:
**03.08.2016 Bulletin 2016/31**

(51) Int Cl.:
***C09D 183/10*** (2006.01)     ***C08F 2/48*** (2006.01)

(21) Application number: **14001325.1**

(22) Date of filing: **11.04.2014**

(54) **Hybrid organic-inorganic nanostructured formulation crosslinkable by solar radiation and method for preparation thereof**

Organisch-anorganische nanostrukturierte UV-härtbare Hybridformulierung und Verfahren zur Herstellung davon

Formulation durcissable aux UV nanostructurée hybride organique-inorganique et son procédé de préparation

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **11.04.2013 EP 13001868**

(43) Date of publication of application:
**15.10.2014 Bulletin 2014/42**

(73) Proprietor: **Università del Salento**
**73100 Lecce (IT)**

(72) Inventors:
• **Esposito Corcione, Carola**
**I-73100 Lecce (LE) (IT)**
• **Frigione, Mariaenrica**
**I-73100 Lecce (LE) (IT)**
• **Striani, Raffaella**
**I-73100 Lecce (LE) (IT)**

(74) Representative: **Gulya's, Hajnalka**
**Marietti, Gislon e Trupiano S.r.l.**
**Via Larga, 16**
**20122 Milano (IT)**

(56) References cited:
• **CAROLA ESPOSITO CORCIONE ET AL: "Factors influencing photo curing kinetics of novel UV-cured siloxane-modified acrylic coatings: Oxygen inhibition and composition", THERMOCHIMICA ACTA, ELSEVIER SCIENCE PUBLISHERS, AMSTERDAM, NL, vol. 534, 27 January 2012 (2012-01-27), pages 21-27, XP028468842, ISSN: 0040-6031, DOI: 10.1016/J.TCA.2012.01.023 [retrieved on 2012-02-09]**
• **XIAO X ET AL: "Preparation of waterborne epoxy acrylate/silica sol hybrid materials and study of their UV curing behavior", COLLOIDS AND SURFACES. A, PHYSICACHEMICAL AND ENGINEERING ASPECTS, ELSEVIER, AMSTERDAM, NL, vol. 359, no. 1-3, 20 April 2010 (2010-04-20), pages 82-87, XP026935182, ISSN: 0927-7757, DOI: 10.1016/J.COLSURFA.2010.01.067 [retrieved on 2010-02-04]**
• **MALUCELLI G ET AL: "Hybrid nanocomposites containing silica and PEO segments: preparation through dual-curing process and characterization", POLYMER, ELSEVIER SCIENCE PUBLISHERS B.V, GB, vol. 46, no. 9, 15 April 2005 (2005-04-15), pages 2872-2879, XP027727915, ISSN: 0032-3861 [retrieved on 2005-04-15]**

**Description**

The present invention relates to a nanostructured organic-inorganic hybrid formulation crosslinkable by solar radiation, and a process for its production. The organic-inorganic hybrid formulation of the invention can be used as hydrophobic coating on substrates of different nature.

In the materials field currently used as hydrophobic coatings, synthetic polymeric products having high molecular weight are of common use, to be applied in the form of solution or emulsion (based on organic solvents or water), or else such polymers showing sufficiently low viscosities (monomers and oligomers) settled in the form of surface films or to be incorporated within the unbonded structure. The most used polymeric materials are based on silanes, siloxanes, acrylic resins and fluorinated compounds. Acrylic and methacrylic resins are among the most widely used polymers in the field of coating supports of different nature thanks to their transparency, discrete water vapor permeability, good water repellency. However, in the last years their use has been limited to the treatment of manufactured articles that are non-outdoor exposed, since these products demonstrated a poor chemical - physical stability with regard to aging processes and the light that causes their yellowing.

A more recent tendency is to lean towards copolymers based on silicone resins, which seem to offer a good combination of mechanical and water repellency properties. Compared to acrylic resins, silicone resins ensure improved performances because of the presence of the Si-O bonding which is much stronger and stable than C-H and C-C bonding. Therefore such resins show good thermal stability and chemical resistance, good water vapor permeability, excellent water repellency and low viscosities. The high hydrophobic capabilities of silane compounds result from their molecular structure. Among the silane products with higher water repellency capability is the siloxane family (such as the polydimethyl siloxane PDMS). The siloxane polymers respond well to the photodegradation, but don't show a sufficient resistance to the acid pollutants, in particular to sulfuric anhydride ($SO_3$).

The fluorinated polymers show good chemical stability towards chemical and physical agents and UV radiations and they are highly water-repellent. However, the main drawback related to their use is their exclusive solubility in chloro-fluorinated solvents, which are highly toxic both for the environment and the operator health. Independently from their composition, the coatings currently present in the market are applied in the form of solutions wherein the product, already in the form of polymer, is dissolved in organic solvents, which are often quite toxic. Recently polymeric water-based solutions are used for environmental and safety reasons, but the great drawback of these systems really is the use of water as carrying solvent, which can be a limit during the formation of the polymeric film. In fact, if adverse environmental conditions occur during the coalescence process of the dispersed particles, water evaporation takes place at high rates (dry ambient) and a poorly homogeneous film is obtained, since particles have no the time to create a continuous structure. Consequently, the formed film is not able to effectively perform its function since it does not completely prevent the penetration of water and external polluting agents. Furthermore, due to too low water evaporation rates (humid ambient) the entrapment of water droplets within the polymeric film with possible plasticizing effect may occur.

In the last fifty years a new materials class which found wide use in various sectors has been put forward: organic-inorganic (O-I) hybrid materials. The study of the O-I hybrids has been particularly active and subject of great interest since, differently from composite or microcomposite materials, obtained introducing inorganic domains (particles or micrometric fibers) along the same polymeric chain, the organic and inorganic phases are interconnected on nanometric scale in the O-I hybrid systems. This peculiar characteristic results in a final product of high performances, since the properties of both phases are not simply added to one another, but tend to act synergistically. The nanometric scale of the organic and inorganic domains makes such systems transparent to light, since their dimensions are less than the wavelength of visible light (400-700 nm). Therefore the great advantage offered by the hybrids resides in the possibility of developing materials able to incorporate in one product a series of properties, such as transparency, water repellency, mechanical and corrosion resistance, UV radiations, adhesion and scratch resistance.

In the market O-I hybrids used as coatings, with fireproof, anti-abrasive, anti-scratch, hydrophobic and oleophobic characteristics, currently exist. Such materials form, for example, the subject of the publication by M. Messori, Materiali polimerici ibridi e nanostrutturati, Atti del XXVIII Convegno-Scuola AIM, Gargnano, 2007. Many publications exist concerning the polymerization of nanostructured coating materials by UV radiation (photopolymerization). Such materials are obtained by the inclusion of lamellar nanofillers in photopolymerizable polymeric matrices. For example, the publication by X. Xiao, C. Hao (Preparation of waterborne epoxy acrylate/silica sol hybrid materials and study of their UV curing behaviour, Colloids Surfaces A: Physicochemical and Engineering Aspects, Vol. 359, No 1-3, 2010, pp. 82-87) describes nanostructured coating materials based on epoxide resins containing organophilic lamellar silicates, demonstrating that the organophilic component, after the photopolymerization, contributes to the increase of impact resistance and breaking strength, as well as the decrease of water absorption.

It is also known the preparation of nanostructured systems obtained by dispersing a lamellar silicate in a hyperbranched acrylic matrix [S. Benfarhi, C. Decker, L. Keller, K. Zahouily, Synthesis of clay nanocomposite materials by light-induced crosslink polymerization, European Polymer Journal 40, (2004)]. The system, subjected to photopolymerization, showed an increase of surface hardness and a high scratch resistance.

The US Application 2013/0005881 describes, on the other hand, a dispersion containing organic-inorganic hybrid nanocomposites formed by inorganic silica nanoparticles linked to organic polymers by covalent bondings. The dispersion has a high solid content (greater than 30% by weight) and high silica content (greater than 35% by weight). Examples of the inorganic silica nanoparticles are methacryloyloxypropyltrimethoxysilane, vinyltri(m)ethoxysilane, allyltrimethoxysilane, vinyltri-isopropenoxysilane, buteniltriethoxysilane. The organic polymer can include alkylacrylates, alkyl-alkylacrylates, acrylonitrile, styrene, etc. The method for the preparation of the dispersion comprises the following steps: hydrolyzing the silane monomers in acidic conditions; treating the surface of the inorganic silica nanoparticles with silane monomers; stabilizing the inorganic silica nanoparticles treated this way with an amine stabilizer; reacting the organic monomers with the inorganic silica nanoparticles previously obtained.

The Korean Application KR 20040104155 describes an organic-inorganic hybrid coating composition crosslinkable by UV radiation. The composition comprises a reaction product of silica sol (obtained by the condensation of an alkoxysilane of melamine type with acrylic alkoxysilane in the presence of an organic solvent in acidic conditions), a multifunctional acrylic monomer and a photoinitiator. The coating composition comprises preferably 40-80% by weight silica sol product, 10-50% by weight multifunctional acrylic monomer and 1-10% by weight photoinitiator, based on the total weight of the composition.

The Chinese Application CN101338086 describes an organic-inorganic hybrid coating crosslinked by means of light and heat. The coating comprises the following components: 7.4%-18.5% silica gel amine resin, 2.6-6.5 % epoxide resin E-44, 15-30 % epoxy acrylate, 5-15% acrylic polyurethane ester, 35-45% active diluent, 2-5% curing agent, 4-6% photoinitiator and 0.5-1% adjuvant. The silica gel amine resin is prepared with a sol-gel method and subsequently the components are mechanically mixed and stirred. The so prepared coating is applied on the metallic surface by spraying, brush painting, roller painting etc. The coated surface is radiated with UV rays and subsequently heated and crosslinked to a film, which proves to be resistant against acid, alkaline substances, salts, water, corrosion, have high hardness, good flexibility and strong adhesion on metallic substrates.

The Chinese Application CN102649835 relates to an organic-inorganic hybrid emulsion of acrylic ester characterized in high silicon content and a method for the preparation thereof. The method comprises modifying the silica sol by a silane binding agent; binding the silica sol modified with monomers having hydrophilic capabilities and containing hydroxy groups; polymerizing in situ with acrylic ester monomers. The emulsion has high storage stability at low temperature too, whereas the coating obtained after its application on a substrate is smooth and shows a high degree of transparency, hardness (5H), adhesion strength and resistance against climatic variations and water.

Nanostructured organic-inorganic hybrid systems are known, also well known as ceramers, made up by a continuous polymeric matrix wherein inorganic domains ($SiO_2$, $TiO_2$, etc.) are dispersed. Such systems are described for example in the following publications: M. Sangermano, G. Malucelli, A. Priola, E. Amerio, E. Zini, E. Fabbri, Hybrid nanocomposites containing silica and PEO segments: préparation through dual curing process and characterisation, Polymer 46/9, (2005); M. Sangermanno, E. Amerio, G. Malucelli, A. Priola, B. Voit, Preparation and characterisation of hybrid nanocomposite coating by photopolymerisation and sol-gel process, Polymer 46, (2005) and M. Sangermanno, E. Amerio, G. Malucelli, A. Priola, G. Rizza, Preparation and characterisation of hyperbranched polymer/silica hybrid nanocoatings by dual-curing process, Macromolecular materials and Engineering 291, (2006).

Publication by Carola Esposito Corcione et al. ("Factors influencing photo curing kinetics of novel UV-cured silocane-modified acrylic coatings: Oxygen inhibition and composition", Thermochimica Acta, Elsevier Science Publishers, Amsterdam, NL, Vol. 534, pages 21-27, 27 January 2012), describes an acrylic system modified with siloxane and containing (3-mercaptopropyl)triethoxysilane (MPTS), poly(dimethylsiloxane)-terminated vinyl (VTPDMS), trimethylpropane trimethylacrylate (TMPTMA) and an UV initiator. This is an organic system, containing polymers only, useful and possibly employable as coating material, for example for stone substrates. The organic product, able to crosslink by UV light, has a discrete water repellency and adhesion to a stone substrate. Such properties are assignable to the presence of VTPDMS (discrete water repellency) and MEMO (discrete adhesion to the stone substrate). VTPDMS is functionalized with MPTS at 100°C in diethylamine. The presence of MPTS in the mixture based on acrylic resin and siloxanes, allows obtaining a good reaction rate and a higher conversion even in the presence of air, and allows the reduction of the UV photoinitiator content.

XIAO X et al.("Preparation of waterborne epoxy acrylate/silica sol hybrid materials and study of their UV curing behavior", Colloids and Surfaces, A: Physicochem. Eng. Aspects, Elsevier, Amsterdam NL, Vol. 359, No. I-3, pages 82-87, 20 April 2010) describes hybrid sol materials based on epoxyacrylate/silica in aqueous form, that are crosslinkable with UV light and are prepared from an organic polymeric phase (water based epoxyacrylate) and a sol oF nano-silica as an inorganic phase. The sol of nano-silica is prepared by a sol-gel method using tetraethyl orthosilicate (TEOS) as a precursor. These organic and inorganic phases are linked by a crosslinking agent (TMSPM). The Tg analysis of the prepared hybrid materials shows that the addition of nano-silica sol improves the thermal stability of the water based epoxyacrylate (WEA) as well as the fireproof properties of the hybrid sol materials based on WEA/silica.

Malucelli G et al. ("Hybrid nanocomposites containing silica and PEO segments: preparation through dual-curing process and characterization", Polymer, Elsevier Science Publishers B.V., GB, Vol. 46, No. 9, pages 2872-2879, 15 April 2005) describes organic-inorganic hybrid nano-compounds containing PEO segments. Two oligomers (PEGDA and BEMA) are prepared and each is mixed with MEMO (binding monomer) and TEOS (inorganic precursor). The obtained mixtures are subjected to "dual curing". The kinetics of the polymerization of both systems are not deteriorated by the presence of 30% by weight of TEOS in the mixture crosslinkable by UV light. It is further described the preparation of a hybrid film containing different amount of TEOS (10-50% by weight) (by using the PEGDA or BEMA mixture). Systems based on BEMA show Tg values slightly higher than PEGDA systems due to the presence of methacrylic double bonds in the polymeric chains. Tg values of the hybrid film become greater with the increase of the TEOS amount in the hybrid.

The nanostructured organic-inorganic hybrid systems have gained an increasing interest by virtue of their properties, such as for example the good scratch, abrasion resistance and good mechanical properties. They combine the properties peculiar to the ceramic materials such as thermal stability, high module and low thermal dilatation coefficient with those of polymeric materials such as high ductility and low processing temperatures of polymeric materials. Known methods for the preparation of the above mentioned nanostructured organic-inorganic hybrid systems allow the application of said hybrid systems on substrates having limited dimensions and require photopolymerization by UV irradiation, i.e. the use af a UV lamp, as well as a subsequent thermal treatment in an oven which is necessary to complete the sol-gel reactions. For these reasons the development of a nanostructured organic-inorganic hybrid formulation is necessary, wherein the inorganic phase actually have nanometric dimensions and is intimately interconnected with the organic one, which is further useful to coat wide surfaces of substrates of different nature, crosslinking at ambient temperature and at the same time showing excellent chemical and physical characteristics comparable or better than known nanostructured organic-inorganic hybrid systems. Another purpose of the present invention is to provide a method for manufacturing such an organic-inorganic hybrid formulation, that is simple, economical and easily achievable on industrial scale, thus also in yards, on substrates of large sizes. These purposes are achieved by a solar organic-inorganic hybrid formulation according to claim 1 and by a method for the preparation thereof according to claim 8.

The nanostructured organic-inorganic hybrid formulation according to the invention is composed of an organic phase, polymerizable by solar radiations, based on a methacrylic resin (TMPTMA), trimethoxypropyl silane methacrylate (MEMO) and functionalized poly(dimethylsiloxane)-terminated vinyl (VTPDMS) and of an inorganic phase, obtained from alkoxy-silane precursor and composed of continuous silica nanodomains. The organic nature component is covalently bound to the inorganic component. The solar organic-inorganic hybrid formulation, object of the present invention, is highly hydrophobic, nanostructured and photopolymerizable, and has complex and advantageous characteristics when used as a coating applied on substrates of different nature. Such characteristics are for example: high water-repellency, excellent surface mechanical properties (scratch resistance, surface hardness), good transparency and negligible color variation.

In particular, the solar organic-inorganic hybrid formulation of the invention contains silica nanophases interconnected with a polymeric matrix polymerizable by solar radiation.

Such nanostructured organic-inorganic hybrid formulation, crosslinkable by solar radiation, contains 4-15% by weight of at least one alkoxy-silane compound, 22-90% by weight of trimethoxypropyl silane methacrylate (MEMO) and functionalized poly(dimethylsiloxane)-terminated vinyl (VTPDMS), 5-60% by weight of a methacrylic resin and 1-5% by weight of a photoinitiator mixture containing at least one UV photoinitiator and at least one photoinitiator that can be activated by visible light.

If not stated differently, the amounts given in % by weight relate to the total weight of the organic-inorganic hybrid formulation.

The alkoxy-silane compound used in the hybrid formulation is preferably tetraethoxysilane (TEOS).

Preferably, the poly(dimethylsiloxane)-terminated vinyl is functionalized with mercaptosilane (mPDMS) and is present in an amount ranging from 2% to 5% by weight with reference to the total weight of the hybrid formulation.

The methacrylic resin is preferably trimethylpropane trimethylacrylate (TMPTMA). The hybrid formulation of the present invention advantageously contains 1-3% by weight of said photoinitiator mixture.

The UV photoinitiator contained in the photoinitiator mixture is preferably bis(2,4,6-trimethylbenzoyl)-phenylphosphinoxide currently commercialized with the name of Irgacure® 819, produced by Ciba-Geigy, whereas the photoinitiator that can be activated by visible light is preferably 2-hydroxy-2-mehyl-1-phenyl-propan-1-one known with the registered trademark name of Darocur® 1173, produced by Ciba-Geigy.

The organic solvent used in the hybrid formulation of the invention, produced by the sol-gel method, is preferably an alcohol.

A further aspect of the invention is represented by a method for the preparation of the solar organic-inorganic hybrid formulation according to claim 1.

For the preparation of the hybrid formulation of the invention the known sol-gel method has been modified so that is obtained a nanostructured organic-inorganic hybrid formulation, which is useful to coat simply and economically substrates of different nature also on industrial scale. Furthermore, the coating obtained by the application of the solar hybrid formulation produced on different substrates, shows excellent chemical and physical characteristics.

The method for the preparation of the solar liquid hybrid formulation of the invention comprises the preparation of a colloidal suspension of solid particles in a liquid (sol phase), which after a hydrolysation and condensation process, is transformed into a single and continuous macromolecule occupying the whole volume (gel phase).

In particular, the method for manufacturing the hybrid formulation of the invention comprises the following steps:

a) mixing an alkoxy-silane compound and trimethoxypropyl silane methacrylate (MEMO) with an organic solvent at an acidic pH,
b) hydrolyzing and condensing the mixture obtained in step a) with water,
c) mixing the product obtained in step b) with a mixture obtained by methacrylic resin and functionalized poly(dimethylsiloxane)-terminated vinyl (VTPDMS), and
d) introducing, in the product obtained in step c), a photoinitiator mixture containing at least one UV photoinitiator and at least one photoinitiator that can be activated by visible light.

More particularly, the process of the invention provides for:

a) mixing 4-15% by weight of an alkoxy-silane compound, 20-85% by weight of trimethoxypropyl silane methacrylate (MEMO) with 1-4% by weight of an organic solvent at an acidic pH,
b) hydrolyzing and condensing the mixture obtained in step a) with water,
c) mixing the product obtained in step b) with a mixture obtained by 5-60% by weight of a methacrylic resin and 2-5% by weight of functionalized poly(dimethylsiloxane)-terminated vinyl (VTPDMS), and
d) introducing, in the product obtained in step c), 1 - 5% by weight of a photoinitiator mixture containing at least one UV photoinitiator and at least one photoinitiator that can be activated by visible light.

All the amounts are referred to the total weight of the formulation, if not stated differently.

As used in this invention, the term "photoinitiator that can be activated by visible light" is referred to photoinitiators having an absorption spectrum both in the UV light region and the visible light region, as well as photoinitiators having an absorption spectrum in the region of visible light only.

The mixing techniques more adequate to promote a complete miscibility between the components provides for the use of a mechanical homogenizer and a magnetic stirrer, used for determined times and mixing temperatures so as to optimise the process. The mixing time in steps a) and b) is ranging between 20 and 60 minutes, preferably between 20 and 40 minutes. The mixing occurs preferably by means of a magnetic stirrer.

The amount of water used in step b) of the method is ranging between 20% and 30% by weight based on the weight of the alkoxy-silane compound.

Step b) is carried out at a temperature ranging between 30°C and 70°C, preferably between 40°C and 60°C to promote the hydrolysation and condensation reactions. The addition of a photoinitiator mixture occurs under vigorous stirring carried out by means of a homogenizer.

The pH of the mixture obtained in step a) is preferably 4. The pH of the mixture can be adjusted with an acid solution, for example with a 5% by weight HCl aqueous solution.

The alkoxy-silane compound used in the method is preferably tetraethoxysilane (TEOS), currently commercialized by Aldrich, playing the role of alkoxy precursor for the hydrolysation and condensation reactions in the sol-gel process.

Preferably the poly(dimethylsiloxane)-terminated vinyl is functionalized with mercaptosilane (mPDMS). The VTPDMS functionalization process with mercaptosilane (MPTS) is necessary to reduce the oxygen inhibition effect against the radicalic photopolymerization reaction, typical of the acrylic and silane monomers. The VTPDMS monomer functionalized with mercaptosilane is named mPDMS.

The use of MEMO and VTPDMS allows, in the process according to the invention, to improve the water-repellency and the chemical-physical stability of the methacrylic resin towards the light.

The methacrylic resin is preferably trimethylpropane trimethylacrylate (TMPTMA), currently produced by Cray Valley. This type of resin is characterized by a high rate due to the presence of three reactive functional groups and a low viscosity.

The UV photoinitiator is preferably bis(2,4,6-trimethylbenzoyl)-phenylphosphinoxide, currently commercialized as Irgacure® 819, produced by Ciba-Geigy. Irgacure® 819 is able to activate the photopolymerization reactions in the desired UV wavelength range, and in particular at the wavelength of 365 nm. The photoinitiator that can be activated by visible light preferably is 2-hydroxy-2-methyl-1-phenylpropan-1-one commercialized with the name of Darocur® 1173, produced by Ciba-Geigy.

The photoinitiator mixture of the Formulation according to the present invention contains the UV photoinitiator and the photoinitiator that can be activated by visible light in a weight ratio ranging in the interval from 0.5:10 to 0.5:20, preferably from I:4 to 1:8, more preferably from 1:2 to 1:6. The hybrid formulation according to the invention is advantageously applied in the form of monomers photopolymerizable *in situ* by solar radiation, since the polymerization *in situ* can improve the penetration depth.

The UV photoinitiator and the photoinitiator that can be activated by visible light are used advantageously in the photoinitiator mixture in a 1:3 weight ratio.

A coating method of substrates of different nature by the application of the nanostructured organic-inorganic hybrid formulation of the invention is also described herein.

The hybrid formulation can be applied on different nature substrates, such as for example glass, wood, metal and plastic by known techniques, such as for example brush painting, spraying, immersion and roller painting depending on economic and technical considerations.

Subsequently the application of the hybrid formulation of the invention, there shall be the polymerization by solar radiation that also allows the completion of the sol-gel process. The thickness of the obtained coating is ranging between about ten and hundreds $\mu$m.

Thanks to the use of a photoinitiator mixture containing at least one UV photoinitiator and at least one photoinitiator that can be activated by visible light in the preparation method of the hybrid formulation according to the present invention, it is possible to carry out simply and economically the polymerization of the monomers used in the formulation of the invention, i.e. by the exposure of the formulation to the solar radiation, thus reducing the production costs as well as the preparation time on industrial scale. The solar radiation not only allows the polymerization of the monomers, but also contributes to the completion of the sol-gel process thus avoiding the use of an oven for the thermal treatment.

Further characteristics and advantages of the present invention will become more evident from the following examples, by way of example and not limiting, with reference to the attached figures, wherein:

- Figure 1 is a chart representing the trend of the values of contact angle on the tested samples depending on time. The tested samples are Lecce stones treated with the hybrid formulation of the invention and subsequently exposed to natural solar photopolymerization;
- Figure 2 is a photo of the contact angle between a water droplet and the surface of a Lecce stone sample treated with the hybrid formulation of the present invention;
- Figure 3 is a photo showing water droplets on the stone support treated with the hybrid product according to the present invention;
- Figure 4 represents the protective efficacy curve of the coating, obtained by polymerization of the hybrid formulation of the present invention onto the Lecce stone samples, depending on time;
- Figure 5 shows the photo of a stone treated with the formulation according to the present invention (stone on the right) compared to a non-treated stone (stone on the left).

Example 1

**Preparation of a solar hybrid formulation of the invention**

If not stated differently, the amounts given in % by weight in the example relate to the total weight of the formulation.

60 g MEMO (produced by Dow Corning) and 9 g TEOS (produced by Aldrich) were mixed over magnetic stirrer for 20 minutes, after 1g ethanol and 5% by weight of hydrochloric acid aqueous solution was added to the obtained mixture to obtain a mixture of pH 4. Subsequently 2g of water were added and the mixing was carried on over magnetic stirrer for 20 minutes at 30°C to promote the hydrolysation and condensation reactions. To the so obtained MEMO and TEOS mixture, a mixture of 2 g mPDMS (acronym of polydimethylsiloxane-terminated vinyl (VTPDMS) produced by Cray Valley) functionalized with mercaptosilane (MPTS) (produced by Aldrich)) and 30 g TMPTMA (produced by Cray Valley) were added.

The preparation of mPDMS occurs by functionalization of VTPDMS in presence of 1% by weight of diethylamine (DTA) (produced by Aldrich), by mixing 100 g VTPDMS and 0.95 g MATS in 1:1 molar ratio and maintaining the obtained mixture for 2h at 100°C in oven. The so obtained mPDMS is used in the following process to prepare the nanostructured organic-inorganic hybrid formulation of the invention. The previously obtained mixture, containing TMPTMA, mPDMS, MEMO and TEOS, was stirred over a magnetic stirrer for 20 minutes. Finally, a photoinitiator mixture comprising 1 g Irgacure® 819 (produced by Ciba Geigy) and 3 g Darocur® 1173 (produced by Ciba Geigy) was added and the obtained liquid formulation was mixed energetically at a rate of 10000 rpm with a homogenizer for 3 minutes.

The so obtained nanostructured organic-inorganic hybrid formulation has been used in the analyses described below.

**Example 2**

**Preparation of a comparative UV hybrid formulation described in European Patent Application No. 13001868.2**

For the preparation of a comparative UV hybrid formulation the same compounds were used as in Example 1 with the difference that only one UV photoinitiator is used, in particular 1 g Irgacur® 819 (produced by Ciba Geigy) is used. The conditions of the method are reported in the Patent Application No. 13001868.2.

In the analyses described below, the so obtained nanostructured organic-inorganic hybrid formulation crosslinkable by UV light has been used as a comparative product.

**Analyses carried out on the treated stone materials.**

The hybrid formulation photopolymerizable by solar radiations, developed and obtained in Example 1, is compared to the comparative UV hybrid formulation, photopolymerizable by dual curing (UV radiation and subsequent thermal treatment) of the European Patent Application No. 13001868.2 and produced in Example 2. Each of these two products has been applied onto a stone support, in particular onto a Lecce stone. The products were applied by painting onto the stone surface, in a single spreading, after the stone specimens has been dried and stabilized in oven for 24 hours in lab ambient.

The film polymerization obtained with the product of Example 1 has been carried out by solar radiation, in the open air. The ambient temperature varied from 25°C to 40°C. The outdoor exposure of substrate to natural solar radiations has occurred for a total of 55 hours. During the exposure to the sun, the ambient temperature has been continuously measured by thermocouple and reported in Table 1.

The polymerization of the film obtained with the comparative UV hybrid formulation of Example 2 has been carried out by the *dual curing* process described in the European Patent Application No. 13001868.2. Analyses were carried out on the Lecce stone samples treated with the experimental products in order to verify the possible use of the hybrid product as hydrophobic coating. In particular, measurements were carried out for obtaining: contact angle, capillarity water absorption, and chromatic variation brought by the hybrid product to the stone support.

In fact, the main requirements, for a hydrophobic coating employable as protectant for stone materials in the field of restoration of cultural heritage, are water repellency (measurable through the contact angle) and the non-alteration of the natural shade of the stone substrate (measurable by color analysis).

**Contact angle, capillarity water absorption and color variation measurements** depending on time

The contact angle measurements have been carried out by the instrument First Ten Angstroms FTA1000 Quick Start (NORMAL 33/89). For the purpose of ensuring a regular distribution of the measurement points and their reproducibility, on every specimen the contact angle has been measured on the basis of a grid corresponding to their surface and consisting of twenty measurement points.

The capillarity water absorption measurements were performed according to the directions set by UNI 10859-2000 regulation.

Onto the surfaces of Lecce stone specimens, color measurements were carried out before and after the treatment, by a reflectance colorimeter CR-410 Konica Minolta following the instructions of the Recommendation NORMAL 43/93. Three series of 10 color measurements were carried out on every sample each to verify the results repeatability. The data were acquired in the CIE space (L a*b*) and the color variations of surfaces after the treatments were given in terms of ∆E.

The results of the measurements of ambient temperature, contact angle and color variation of the Lecce stone specimens treated with the solar hybrid formulation obtained in Example 1, according to the present invention, in different moments during 55 hours exposure to solar radiation, are summarized in Table 1.

**Table 1**

| | | | | | Exposure time to the sun (h) | | | | | |
|---|---|---|---|---|---|---|---|---|---|---|
| | 0 | 3 | 6 | 10 | 12 | 17 | 20 | 25 | 35 | 55 |
| T(°C) | | 36-33 | 36-30 | 30-34 | 32-35 | 30-27 | 28-31 | 27-26 | 32-20 | 28-25 |
| α (°) | | 92.3 ±0,9 | 133.8 ±3,4 | 134.5 ±2 | 133.1± 1.7 | 133.4 ±2.1 | 135.9 ±2.3 | 134.3 ±1,1 | 137.1 ±1,6 | 135.1± 1.2 |
| ∆ E | | 12.52 | 8.44 | 8.90 | 8.12 | 8.45 | 8.44 | 8.65 | 8.13 | 7.04 |

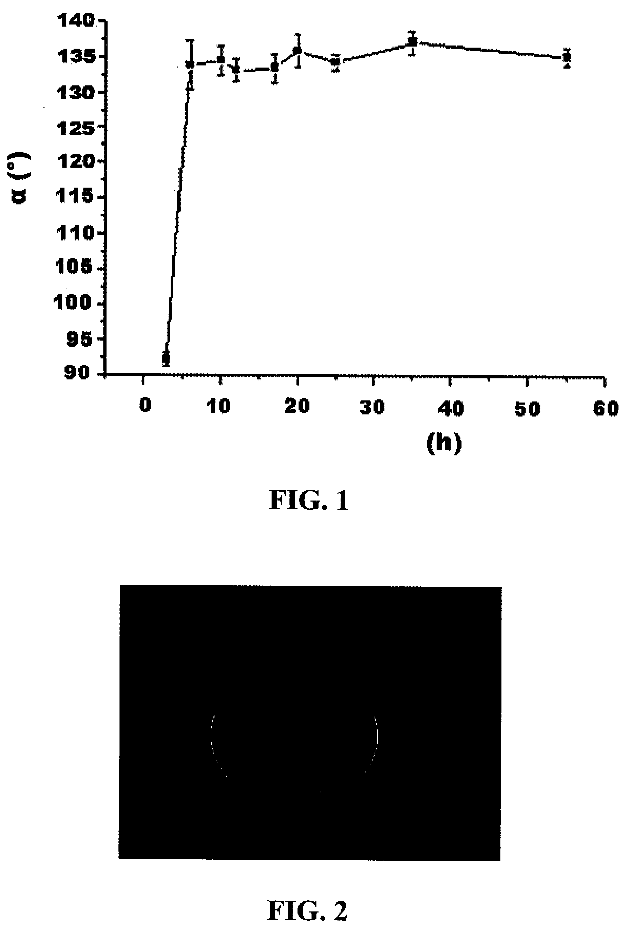

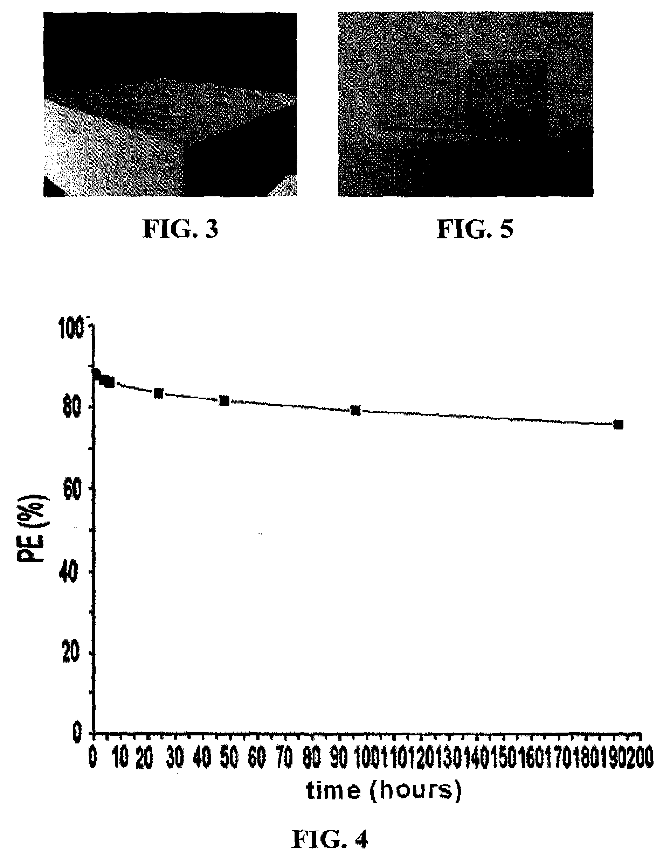

The carried out measurements of contact angle demonstrate unequivocally that the solar hybrid formulation according to the present invention is able to reach excellent hydrophobic properties after only 6 hours exposure to solar radiation at ambient temperature. Furthermore, the product is able to cure the same day it is applied, immediately performing its protecting action. The trend of the contact angle values of the tested samples is showed on the chart of Figure 1, from which it can be deduced that the solar hybrid product has excellent water-repellency properties that are also maintained quite stable over time. In order to show better the potential of the developed solar hybrid product, a contact angle measurement carried out on a Lecce stone specimen, shown by the photo of Figure 2 and treated with the solar hybrid product of Example 1, is reported below. The photo of Figure 3 shows some water droplets onto the stone support treated with the solar hybrid product, highlighting its unequivocally high hydrophobic power.

Such result clearly highlights that the solar hybrid formulation applied as coating has excellent hydrophobic properties.

The color variation data reported in Table 1 further highlight that the solar hybrid product doesn't alter the natural color of the stone also maintaining a color variation rather stable over time.

Excellent results have also been obtained by the capillarity measurements made on the stone samples treated with the solar hybrid product obtained in Example 1, according to the regulation (UNI 10859-2000). Further from the capillarity water absorption measurements the protective efficacy (PE) of treated specimens was calculated, according to the formula:

$$PE = \frac{P_{H_2O(NT)} - P_{H_2O(T)}}{P_{H_2O(NT)}} * 100$$

where $P_{H2O(NT)}$ and $P_{H2O(T)}$ are respectively the grams of water absorbed by capillarity by the stone specimen not-treated and treated after 8 days. Figure 4 shows the protective efficacy curve of the photopolymerizable hybrid formulation of the invention depending on the time given in hours.

The final values of contact angle, protective efficacy by capillarity and color variation all obtained on the formulation according to the present invention (solar hybrid) obtained in Example 1 and on the comparative UV hybrid formulation obtained in Example 2, are compared in Table 2.

Table 2

|  | Protective efficacy by capillarity (%) | Contact angle (°) | Color variation ($\Delta$E) |
|---|---|---|---|
| Solar hybrid | 87 | 135.1$\pm$1.2 | 7.04 |
| UV hybrid | 86 | 130.4$\pm$4.1 | 11.42 |

The comparison between the values of contact angle and color variation of the solar hybrid system to that of the comparative UV hybrid, very clearly highlights that the system object of the present invention (solar hybrid) has an excellent hydrophobicity (detectable by contact angle and protective efficacy data), comparable to that of the comparative UV hybrid product. The obtained PE values are equal to about 86% for the comparative UV hybrid product and 87% for the solar hybrid product according to the present invention (Table 2).

Furthermore, the solar hybrid causes a very slight color alteration of the stone substrate, lower than the comparative UV hybrid. In fact, the value of color variation ($\Delta$E) measured on the specimen treated with the hybrid formulation (solar hybrid) obtained in Example 1 was 7.04, whereas the value of the specimen treated with the comparative UV hybrid formulation obtained in Example 2 was 11.42.

The difference in the color variation caused by treatment with the comparative UV hybrid formulation obtained in Example 2 and with the solar hybrid formulation according to the present invention obtained in Example 1, is significant. The photo of Figure 5 shows that the Lecce stone treated with the solar hybrid formulation according to the present invention (stone on the right) only underwent a very slight alteration of the natural coloring of the non-treated stone (stone on the left).

This fact is extremely advantageous in the cultural heritage protection field for the product application as protectant for stone substrates. Furthermore, the solar hybrid product shows the additional huge advantage of not requiring a dual curing treatment in order to cure, being on the contrary necessary for the curing of the comparative UV hybrid product. The solar hybrid in fact doesn't require either UV radiations, nor thermal treatment, but simply a natural exposure to the sun for a minimum time of 6 hours.

The results demonstrate that the examined hybrid formulations, independently from the composition or the curing mode, have excellent water repellent properties that are maintained stable over time and show high protective efficacy by capillarity. Therefore, the use of the photoinitiator mixture according to the present invention allows the simplification of the known method for the production of the comparative UV hybrid formulation (object of the European Patent Application No. 13001868.2) also making it more economical and allows the production of the hybrid formulations on industrial scale.

The performed experiments demonstrate that the nanostructured organic-inorganic hybrid formulation obtained by the method of the present invention has all the chemical and mechanical advantageous characteristics of the comparative UV hybrid formulation, which is the object of the European Patent Application No. 13001868.2, for example contact angle, protective efficacy by capillarity, scratch resistance, Shore D hardness, etc. The properties measured by DLS analysis (Dynamic Light Scattering), XRD and thermo gravimetric analysis, remain unchanged too. Furthermore, the surfaces treated with the formulation of the present invention undergo negligible color variation of the substrate with respect to the color before the treatment. For this reason, the hybrid formulation of the present invention is particularly suitable for the application as coating material onto substrates of different nature thanks to its excellent chemical and physical characteristics, such as scratch resistance, transparency, hardness, hydrophobic properties, high glass transition temperature and lack of chromatic variation for a long time.

**Claims**

1. A nanostructured organic-inorganic hybrid formulation crosslinkable by solar radiation, **characterized by** comprising at least one alkoxy-silane compound, trimethoxypropyl silane methacrylate, functionalized poly(dimethylsiloxane)-terminated vinyl, at least one methacrylic resin, a photoinitiator mixture containing at least one UV photoinitiator and at least one photoinitiator that can be activated by visible light.

2. A nanostructured organic-inorganic hybrid formulation crosslinkable by solar radiation according to claim 1, **characterized by** comprising 4-15% by weight of at least one alkoxy-silane compound, 22-90% by weight of trimethoxypropyl silane methacrylate and functionalized poly(dimethylsiloxane)-terminated vinyl, 5-60% by weight of a methacrylic resin and 1-5% by weight of a photoinitiator mixture containing at least one UV photoinitiator and at least one photoinitiator that can be activated by visible light.

3. The solar hybrid formulation according to claim 1 or 2, **characterized in that** the alkoxy-silane compound is tetraethoxysilane.

4. The hybrid formulation according to claim 1 or 2, **characterized in that** the functionalized poly(dimethylsiloxane)-terminated vinyl is present in the formulation in an amount ranging from 2% to 5% by weight.

5. The hybrid formulation according to claim 1 or 2, **characterized in that** the methacrylic resin is trimethylpropane trimethylacrylate.

6. The hybrid formulation according to claim 1 or 2, **characterized in that** the weight ratio of the UV photoinitiator to the photoinitiator that can activated by visible light in the photoinitiator mixture, is ranging from 0.5:10 to 0.5:20, preferably from 1:4 to 1:8, more preferably from 1:2 to 1:6.

7. The hybrid formulation according to any one of claims 1, 2 and 6, **characterized in that** the photoinitiator mixture includes bis(2,4,6-trimethylbenzoyl)-phenylphosphinoxide and 2-hydroxy-2-methyl-1-phenyl-propan-1-one.

8. Method for the preparation of the nanostructured organic-inorganic hybrid formulation of claim 1, **characterized by** comprising the following steps:

a) mixing an alkoxy-silane compound and trimethoxypropyl silane methacrylate with an organic solvent at an acidic pH,
b) hydrolyzing and condensing the mixture obtained in step a) with water,
c) mixing the product obtained in step b) with a mixture obtained by methacrylic resin and a functionalized poly(dimethylsiloxane)-terminated vinyl,
d) introducing, in the product obtained in step c), a photoinitiator mixture containing at least one UV photoinitiator and at least one photoinitiator that can be activated by visible light.

9. Method for the preparation of the nanostructured organic-inorganic hybrid formulation of claim 8, **characterized by** comprising the following steps:

a) mixing 4-15% by weight of an alkoxy-silane compound, 20-85% by weight of trimethoxypropyl silane methacrylate with 1-4% by weight of an organic solvent at an acidic pH,

b) hydrolyzing and condensing the mixture obtained in step a) with 20-30% by weight of water based on the alkoxy-silane compound content,

c) mixing the product obtained in step b) with a mixture obtained by 5-60% by weight of a methacrylic resin and 2-5% by weight of a functionalized poly(dimethylsiloxane)-terminated vinyl, and

d) introducing, in the product obtained in step c), 1-5% by weight of a photoinitiator mixture containing at least one UV photoinitiator and at least one photoinitiator that can be activated by visible light.

**10.** The method according to claim 8 or 9, **characterized in that** the alkoxy-silane compound is tetraethoxysilane.

**11.** The method according to claim 8 or 9, **characterized in that** the methacrylic resin is trimethylpropane trimethylacrylate.

**12.** The method according to claim 8 or 9, **characterized in that** the weight ratio of the UV photoinitiator to the photoinitiator that can be activated by visible light in the photoinitiator mixture, is ranging from 0.5:10 to 0.5:20, preferably from 1:4 to 1:8, more preferably from 1:2 to 1:6.

**13.** The method according to claim 8 or 9, **characterized in that** the photoinitiator mixture includes bis(2,4,6-trimethylbenzoyl)-phenylphosphinoxide and 2-hydroxy-2-methyl-1-phenyl-propan-1-one.

**Patentansprüche**

**1.** Nanostrukturierte organisch-anorganische Hybridformulierung, welche durch Sonnenstrahlung vernetzbar ist, **dadurch gekennzeichnet, dass** diese mindestens eine Alkoxysilanverbindung, Trimethoxypropylsilanmethacrylat, funktionalisiertes Poly(dimethylsiloxan)-endständiges Vinyl, mindestens ein Methacrylatharz, eine Photoinitiatormischung, enthaltend mindestens einen UV-Photoinitiator und mindestens einen Photoinitiator, der durch sichtbares Licht aktiviert werden kann, enthält.

**2.** Nanostrukturierte organisch-anorganische Hybridformulierung, welche durch Sonnenstrahlung vernetzbar ist, gemäß Anspruch 1, **dadurch gekennzeichnet, dass** diese 4 bis 15 Gew.-% mindestens einer Alkoxysilanverbindung, 22 bis 90 Gew.-% Trimethoxypropylsilanmethacrylat und funktionalisiertes Poly(dimethylsiloxan)-endständiges Vinyl, 5 bis 60 Gew.-% eines Methacrylatharzes und 1 bis 5 Gew.-% einer Photoinitiatormischung, enthaltend mindestens einen UV-Photoinitiator und mindestens einen Photoinitiator, der durch sichtbares Licht aktiviert werden kann, enthält.

**3.** Solare Hybridformulierung gemäß Anspruch 1 oder 2, **dadurch gekennzeichnet, dass** die Alkoxysilanverbindung Tetraethoxysilan ist.

**4.** Hybridformulierung gemäß Anspruch 1 oder 2, **dadurch gekennzeichnet, dass** das funktionalisierte Poly(dimethylsiloxan)-endständige Vinyl in der Formulierung in einer Menge im Bereich von 2 bis 5 Gew.-% enthalten ist.

**5.** Hybridformulierung gemäß Anspruch 1 oder 2, **dadurch gekennzeichnet, dass** das Methacrylatharz Trimethylpropantrimethylacrylat ist.

**6.** Hybridformulierung gemäß Anspruch 1 oder 2, **dadurch gekennzeichnet, dass** das Gewichtsverhältnis des UV-Photoinitiators zu dem Photoinitiator, der durch sichtbares Licht aktiviert werden kann, in der Photoinitiatormischung im Bereich von 0,5:10 bis 0,5:20, vorzugsweise von 1:4 bis 1:8, insbesondere bevorzugt von 1:2 bis 1:6 liegt.

**7.** Hybridformulierung gemäß einem der Ansprüche 1, 2 und 6, **dadurch gekennzeichnet, dass** die Photoinitiatormischung Bis-(2,4,6-trimethylbenzoyl)phenylphosphinoxid und 2-Hydroxy-2-methyl-1-phenylpropan-1-on enthält.

**8.** Verfahren zur Herstellung der nanostrukturierten organisch-anorganischen Hybridformulierung gemäß Anspruch 1, **dadurch gekennzeichnet, dass** dieses die folgenden Schritte umfasst:

a) Mischen einer Alkoxysilanverbindung und Trimethoxypropylsilanmethacrylat mit einem organischen Lösungsmittel bei einem sauren pH-Wert,

b) Hydrolysieren und Kondensieren der in Schritt a) erhaltenen Mischung mit Wasser,

c) Mischen des in Schritt b) erhaltenen Produktes mit einer durch Methacrylatharz und einem funktionalisierten Poly(dimethylsiloxan)-endständigem Vinyl erhaltenen Mischung,

d) Einführen einer Photoinitiatormischung, enthaltend mindestens einen UV-Photoinitiator und mindestens einen Photoinitiator, der durch sichtbares Licht aktiviert werden kann, in das in Schritt c) erhaltene Produkt.

9. Verfahren zur Herstellung der nanostrukturierten organisch-anorganischen Hybridformulierung gemäß Anspruch 8, **dadurch gekennzeichnet, dass** dieses die folgenden Schritte umfasst:

a) Mischen von 4 bis 15 Gew.-% einer Alkoxysilanverbindung, 20 bis 85 Gew.-% Trimethoxypropylsilanmethacrylat mit 1 bis 4 Gew.-% eines organischen Lösungsmittels bei einem sauren pH-Wert,

b) Hydrolysieren und Kondensieren der in Schritt a) erhaltenen Mischung mit 20 bis 30 Gew.-% Wasser bezogen auf den Alkoxysilanverbindungsanteil,

c) Mischen des in Schritt b) erhaltenen Produktes mit einer durch 5 bis 60 Gew.-% Methacrylatharz und 2 bis 5 Gew.-% eines funktionalisierten Poly(dimethylsiloxan)-endständigen Vinyls erhaltenen Mischung,

d) Einführen von 1 bis 5 Gew.-% einer Photoinitiatormischung, enthaltend mindestens einen UV-Photoinitiator und mindestens einen Photoinitiator, der durch sichtbares Licht aktiviert werden kann, in das in Schritt c) erhaltene Produkt.

10. Verfahren gemäß Anspruch 8 oder 9, **dadurch gekennzeichnet, dass** die Alkoxysilanverbindung Tetraethoxysilan ist.

11. Verfahren gemäß Anspruch 8 oder 9, **dadurch gekennzeichnet, dass** das Methacrylatharz Trimethylpropantrimethylacrylat ist.

12. Verfahren gemäß Anspruch 8 oder 9, **dadurch gekennzeichnet, dass** das Gewichtsverhältnis des UV-Photoinitiators zu dem Photoinitiator, der durch sichtbares Licht aktiviert werden kann, in der Photoinitiatormischung im Bereich von 0,5:10 bis 0,5:20, vorzugsweise von 1:4 bis 1:8, insbesondere bevorzugt von 1:2 bis 1:6 liegt.

13. Verfahren gemäß Anspruch 8 oder 9, **dadurch gekennzeichnet, dass** die Photoinitiatormischung Bis-(2,4,6-trimethylbenzoyl)phenylphosphinoxid und 2-Hydroxy-2-methyl-1-phenylpropan-1-on enthält.

**Revendications**

1. Formulation hybride organique-inorganique nanostructurée réticulable par les rayons du soleil, **caractérisée en ce qu'**elle comprend au moins un composé alcoxy-silane, un méthacrylate de triméthoxypropyl silane, un vinyle à terminaison poly(diméthylsiloxane) fonctionnalisé, au moins une résine méthacrylique, un mélange de photoinitiateur contenant au moins un photoinitiateur UV et au moins un photoinitiateur qui peut être activé par la lumière visible.

2. Formulation hybride organique-inorganique nanostructurée réticulable par les rayons du soleil selon la revendication 1, **caractérisée en ce qu'**elle comprend de 4 à 15 % en poids d'au moins un composé alcoxy-silane, de 22 à 90 % en poids de méthacrylate de triméthoxypropyl silane et de vinyle à terminaison poly(diméthylisoxane) fonctionnalisé, de 5 à 60 % en poids d'une résine méthacrylique et de 1 à 5 % en poids d'un mélange de photoinitiateurs contenant au moins un photoinitiateur UV et au moins un photoinitiateur qui peut être activé par la lumière visible.

3. Formulation hybride solaire selon la revendication 1 ou 2, **caractérisée en ce que** le composé alcoxy-silane est le tétraéthoxysilane.

4. Formulation hybride selon la revendication 1 ou 2, **caractérisée en ce que** le vinyle à terminaison poly(diméthylsiloxane) fonctionnalisé est présent dans la formulation en une quantité dans la plage de 2 % à 5 % en poids.

5. Formulation hybride selon la revendication 1 ou 2, **caractérisée en ce que** la résine méthacrylique est le triméthylacrylate de triméthylpropane.

6. Formulation hybride selon la revendication 1 ou 2, **caractérisée en ce que** le rapport en poids du photoinitiateur UV sur le photoinitiateur qui peut être activé par la lumière visible dans le mélange de photoinitiateur, se trouve dans la plage de 0,5/10 à 0,5/20, de préférence de 1/4 à 1/8, de manière davantage préférée de 1/2 à 1/6.

7. Formulation hybride selon l'une quelconque des revendications 1, 2 et 6, **caractérisée en ce que** le mélange de photoinitiateur comprend du bis(2,4,6-triméthylbenzoyl)-phénylphosphinoxyde et du 2-hydroxy-2-méthyl-1-phényl-propan-1-one.

8. Procédé de préparation de la formulation hybride organique-inorganique nanostructurée selon la revendication 1, **caractérisé en ce qu'**il comprend les étapes suivantes :

a) le mélange d'un composé alcoxy-silane et d'un méthacrylate de triméthoxypropyl silane avec un solvant organique à un pH acide,
b) l'hydrolyse et la condensation du mélange obtenu à l'étape a) avec de l'eau,
c) le mélange du produit obtenu à l'étape b) avec un mélange obtenu par une résine méthacrylique et un vinyle à terminaison poly(diméthylsiloxane) fonctionnalisé,
d) l'introduction, dans le produit obtenu à l'étape c), d'un mélange de photoinitiateurs contenant au moins un photoinitiateur UV et au moins un photoinitiateur qui peut être activé par la lumière visible.

9. Procédé de préparation de la formulation hybride organique-inorganique nanostructurée selon la revendication 8, **caractérisé en ce qu'**il comprend les étapes suivantes :

a) le mélange de 4 à 15 % en poids d'un composé alcoxy-silane, de 20 à 85 % en poids de méthacrylate de triméthoxypropyl silane avec 1 à 4 % en poids d'un solvant organique à un pH acide,
b) l'hydrolyse et la condensation du mélange obtenu dans l'étape a) avec 20 à 30 % en poids d'eau sur la base de la teneur en composé alcoxy-silane,
c) le mélange du produit obtenu à l'étape b) avec un mélange obtenu par 5 à 60 % en poids d'une résine méthacrylique et 2 à 5 % en poids d'un vinyle à terminaison poly(diméthylsiloxane) fonctionnalisé, et
d) l'introduction, dans le produit obtenu à l'étape c), de 1 à 5 % en poids d'un mélange de photoinitiateurs contenant au moins un photoinitiateur UV et au moins un photoinitiateur qui peut être activé par la lumière visible.

10. Procédé selon la revendication 8 ou 9, **caractérisé en ce que** le composé alcoxy-silane est le tétraéthoxysilane.

11. Procédé selon la revendication 8 ou 9, **caractérisé en ce que** la résine méthacrylique est le triméthylacrylate de triméthylpropane.

12. Procédé selon la revendication 8 ou 9, **caractérisé en ce que** le rapport en poids du photoinitiateur UV sur le photoinitiateur qui peut être activé par la lumière visible dans le mélange de photoinitiateur, se trouve dans la plage de 0,5/10 à 0,5/20, de préférence de 1/4 à 1/8, de manière davantage préférée de 1/2 à 1/6.

13. Procédé selon la revendication 8 ou 9, **caractérisé en ce que** le mélange de photoinitiateurs comprend du bis(2,4,6-triméthylbenzoyl)-phénylphosphinoxyde et du 2-hydroxy-2-méthyl-1-phényl-propan-1-one.

FIG. 1

FIG. 2

**FIG. 3**

**FIG. 5**

**FIG. 4**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20130005881 A
- KR 20040104155
- CN 101338086
- CN 102649835
- EP 13001868 A

### Non-patent literature cited in the description

- **M. MESSORI.** Materiali polimerici ibridi e nanostrutturati. *Atti del XXVIII Convegno-Scuola AIM,* 2007
- **X. XIAO ; C. HAO.** Preparation of waterborne epoxy acrylate/silica sol hybrid materials and study of their UV curing behaviour. *Colloids Surfaces A: Physicochemical and Engineering Aspects,* 2010, vol. 359 (1-3), 82-87
- **S. BENFARHI ; C. DECKER ; L. KELLER ; K. ZAHOUILY.** Synthesis of clay nanocomposite materials by light-induced crosslink polymerization. *European Polymer Journal,* 2004, vol. 40
- **M. SANGERMANO ; G. MALUCELLI ; A. PRIOLA ; E. AMERIO ; E. ZINI ; E. FABBRI.** Hybrid nanocomposites containing silica and PEO segments: préparation through dual curing process and characterisation. *Polymer,* 2005, vol. 46/9
- **M. SANGERMANNO ; E. AMERIO ; G. MALUCELLI ; A. PRIOLA ; B. VOIT.** Preparation and characterisation of hybrid nanocomposite coating by photopolymerisation and sol-gel process. *Polymer,* 2005, vol. 46
- **M. SANGERMANNO ; E. AMERIO ; G. MALUCELLI ; A. PRIOLA ; G. RIZZA.** Preparation and characterisation of hyperbranched polymer/silica hybrid nanocoatings by dual-curing process. *Macromolecular materials and Engineering,* 2006, vol. 291
- Factors influencing photo curing kinetics of novel UV-cured silocane-modified acrylic coatings: Oxygen inhibition and composition. **CAROLA ESPOSITO CORCIONE et al.** Thermochimica Acta. Elsevier Science Publishers, 27 January 2012, vol. 534, 21-27
- Preparation of waterborne epoxy acrylate/silica sol hybrid materials and study of their UV curing behavior. **XIAO X et al.** Colloids and Surfaces, A: Physicochem. Eng. Aspects. Elsevier, 20 April 2010, vol. 359, 82-87
- Hybrid nanocomposites containing silica and PEO segments: preparation through dual -curing process and characterization. **MALUCELLI G et al.** Polymer. Elsevier Science Publishers, 15 April 2005, vol. 46, 2872-2879